# EUROPEAN PATENT APPLICATION

(11) **EP 1 129 954 A1**
(43) Date of publication of application: **05.09.2001**
(21) Application number: 99926818.8
(22) Date of filing: 25.06.1999
(51) Int. Cl.: B65D 30/16, B32B 27/08

(54) **SELF-SUPPORTING AND EASY OPEN BAG**

(30) Priority: 26.06.1998 JP 18063998
(71) Applicant: Idemitsu Petrochemical Co., Ltd., Tokyo 108-0041 (JP)
(72) Inventor: OSHIMA, Masanobu, Sodegaura-shi, Chiba-ken 299-0205 (JP); TAKASHIGE, Masao, Sodegaura-shi, Chiba-ken 299-0205 (JP); IWAMOTO, Takehiro, Sodegaura-shi, Chiba-ken 299-0205 (JP)
(74) Representative: Rackham, Stephen Neil
(86) International application number: JP9903400
(87) International publication number: WO0000401

(57) **Abstract**

An easily openable self-standing bag (11) having excellent easily-openability and self-standability is provided, where (a) a film containing L-LDPE as a main component, (b) a film made by biaxially drawing a raw film containing Ny6 as a main component at a drawing ratio of not less than 2.8 in both MD and TD directions, (c) a biaxially drawing polyethylene terephthalate are used, the (a) film as a sealant layer (12A), the (b) film as an intermediate layer (12B) and (c) film as an outermost layer (12C) being laminated to form a bag body (12), the bag further including a resin film for split guide (13) having directional array of crystalline area being laminated along a splitting portion of the bag body (12) and a notch for splitting (15) continuous with the resin film for split guide (13) and the bag body (12).

## Description

### Technical Field

The present invention relates to an easily openable self-standing bag, which, for example, can be used as a pouch for containing refill liquid etc.

### Background Art

In recent years, in order not to develop environmental problem, transition has been made from rigid containers difficult to be abandoned after use to flexible package bags easily to be disposed of.

Such flexible package bags are used for pouches for containing refill liquid (such as detergent, cosmetic lotion, oil for machines, and seasonings and other foods, each in liquid or slurry phase).

It is necessary for a base material of a bag body of the flexible package bag to have greater strength by increasing thickness thereof so that heavy substance can be contained therein.

However, when the thickness of the bag body is increased, the bag is difficult to be opened by hand in opening the package bag. Further, since split line is not straight after being cut, clear cut could not be obtained.

Conventionally, in order to solve the above problem, a package bag having a bag body adhered with a resin sheet for split guide having directional array of crystalline area has been proposed in order to facilitate unidirectional splitting (Japanese Patent Publication No. Sho 53-12216).

According to the package bag, though guide effect by the resin sheet for split guide can be expected when the bag body is made of thin film (around 30 to 60µm), satisfactory cut may not be obtained when the bag body is made of thick film (e.g. 80-150µm).

On the other hand, another refill detergent pouch having an innermost layer of film made of mixture of linear low-density polyethylene and ethylene-butene-1-copolymer, an intermediate layer of drawing polyolefin film having orientation ratio defined by infrared dichroic method, and an outermost layer of biaxially drawing nylon film has been proposed (Japanese Patent Laid-Open Publication No. Hei 5-193079).

According to the refill detergent pouch, since the polyolefin of the intermediate layer is polypropylene having ethylene content of not more than 2wt% or high-density polyethylene having density of not less than 0.945 and has high orientation ratio, satisfactory bag strength cannot be obtained. Further, since the bag body has the above triple-layered structure, manufacturing cost thereof can be expensive.

### Disclosure of the Invention

An object of the present invention is to provide an easily openable self-standing bag having excellent easily-openability and self-standing properties.

An easily openable self-standing bag according to the present invention has: (a) a film including linear low-density polyethylene (L-LDPE) as a main component; (b) a film made from a raw film having nylon 6 (Ny6) as a main component biaxially drawing at a ratio not less than 2.8 in both MD direction and TD direction; a bag body having a sealant layer of the (a) film of 80 to 150µm thick and an outer layer covering the sealant layer of the (b) film to be laminated thereon; a resin film for split guide having directional array of a crystalline area laminated along a splitting portion of the bag body; and a notch for splitting continuously extending from the resin film for split guide to the bag body.

The L-LDPE is a copolymer of ethylene and α-olefin. The α-olefin may be 1-butene, 1-hexene, 1-octene etc., where C4 type olefin is preferable in view of splittability.

In the above (a) film, containing the L-LDPE as a main component refers to having the L-LDPE by an amount of not less than 35%. The L-LDPE contributes to improvement in shock resistance.

When the (a) film is less than 80µm thick, firmness of the bag itself is so weakened that the bag does not serve as a self-standing bag. When the (a) film is more than 150µm thick, the bag is difficult to be opened even when the resin film for split guide is provided to the bag body.

The (b) film may be located on an external side of the sealant layer, which is not limited to the outermost side. For instance, the (b) film may be directly laminated on the sealant layer or may be laminated through another film.

When the drawing ratio in the MD direction (moving direction of the film) and the TD direction (width direction of the film) is smaller than 2.8, linear cuttability can be deteriorated and shock resistance can be lowered to cause problem in practical use.

The resin film for split guide has a directional array of crystalline area by uniaxially drawing the film vertically or horizontally. Since the strength of the drawing film in a direction perpendicular to the drawing direction, the drawing film can be easily split in one direction along the drawing direction. The type of resin to be used is, for instance, polyethylene, polypropylene etc.

The notch for splitting may be formed in any shape, which is, for instance, linear cut and V-shaped notch.

The resin film for split guide may be formed in any thickness, which is, for instance, 30 to 130µm, more preferably, 40-100µm.

Further, the shape of the resin film for split guide may be in any manner, which may be band-shape, for instance. The band-shape may have any width, which may be 5-20mm, for example.

In the present invention, in addition to the (a) film and the (b) film, (c) a biaxially drawing polyethylene terephthalate (PET) film may preferably be provided, the (c) film being laminated as an outer layer of the sealant layer as well as the (b) film.

The lamination order of the (b) film and the (c) film may be decided at will. For instance, the (b) film may be provided adjacent to the (a) film and the (c) film may be located to the outside thereof, or alternatively, the location of the (b) film and the (c) film may be reversely arranged.

In the present invention, a bonding strength of the resin film for split guide with the bag body may preferably be not less than 5g/mm.

When the bonding strength is less than 5g/mm, the resin film for split guide is likely to be peeled off from the bag body and the bag body becomes difficult to be straightly opened.

In the present invention, the (b) film may preferably contain 55 to 85wt% of nylon 6 (Ny6) and 15 to 45wt% of metaxylylene adipamide (MXD6) (Ny6+MXD6=100wt%).

When the MXD6 content in the (b) film is less than 15wt%, easily-splittability and linear-cuttability can be deteriorated and the film is difficult be torn by hand. On the other hand, when the MXD6 content exceeds 45wt%, shock resistance is greatly lowered and becomes not suitable for practical use.

In the present invention, the L-LDPE of the (a) film may preferably be a copolymer of ethylene and 1-butene (C4 type L-LDPE).

1-butene is the most preferable for the α-olefin for composing the copolymer with ethylene in view of splittability. Further, when a surface-active agent such as a detergent is used as the contents of the bag, the C4 type L-LDPE especially improves anti-environmental-stress crackability.

In the present invention, a main component of the (a) film may preferably be L-LDPE, the film further containing low-density polyethylene (LDPE) and ethylene-butene-1 copolymer (Et-Bu1).

By blending LDPE to L-LDPE, the splittability can be improved, thus improving easily-openability. The ethylene-butene-1 copolymer improves anti-environmental-stress-crackability and makes low-temperature seal possible, thus enhancing productivity.

In the present invention, the resin film for split guide may preferably be provided on both surfaces of the bag body.

By providing the resin film for split guide on both surfaces of the bag body, easily-openability can be further enhanced.

### Brief Description of Drawings

Fig. 1 is a plan view showing an easily openable self-standing bag according to first embodiment of the present invention;
Fig. 2 is a perspective view showing a primary portion of the easily openable self-standing bag according to the aforesaid embodiment;
Fig. 3 is a cross section showing a primary portion of the easily openable self-standing bag according to the aforesaid embodiment;
Fig. 4 is a plan view showing a use of the easily openable self-standing bag according to the aforesaid embodiment; and
Fig. 5 is a cross section showing a primary portion of an easily openable self-standing bag according to second embodiment of the present invention.

### Best mode for Carrying out the Invention

### [First Embodiment]

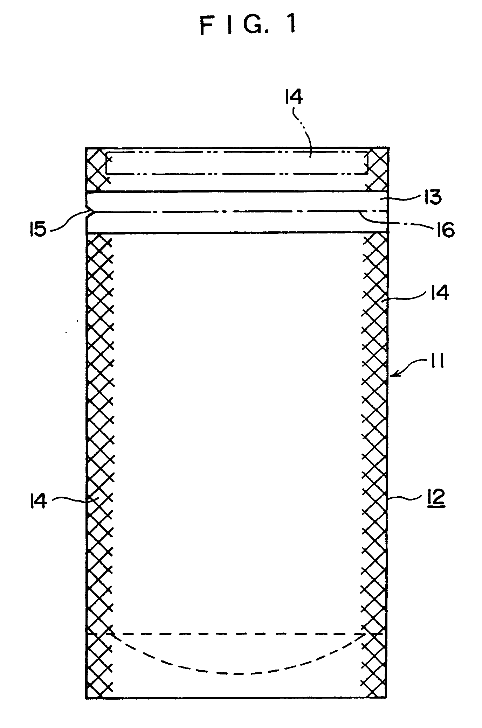

An easily openable self-standing bag 11 according to first embodiment of the present invention will be described below with reference to Figs. 1 to 4.

The easily openable self-standing bag 11 is a refill pouch of, for instance, a detergent.

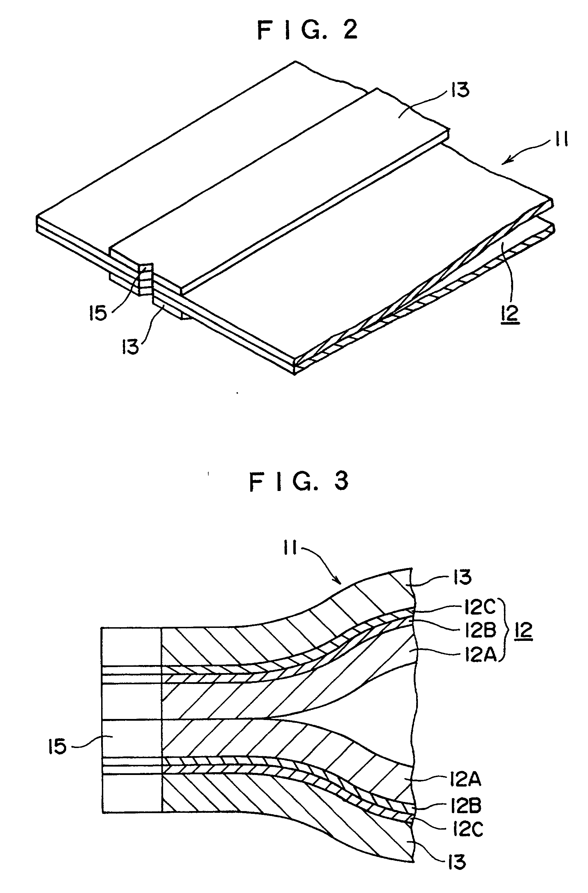

As shown in Figs. 2 and 3, the easily openable self-standing bag 11 has a bag body 12 formed by laminating below-described (a) film as a sealant layer 12A, (b) film as an intermediate layer 12B and (c) film as an outer layer 12C, and a resin film for split guide 13 is adhered along a split portion of the bag body 12. The resin film for split guide 13 is provided on both surfaces of the bag body 12. A seal portion 14 is formed on three sides of the bag body 12 by heat sealing except for the bottom. An opening of the bag body is heat-sealed after filling contents therein.
(a) film is mainly composed of L-LDPE, which includes LDPE and Et-Bul as necessary. L-LDPE is C4 type L-LDPE or C8 type L-LDPE. The thickness of the (a) film is 80 to 150µm.
(b) film is made from a raw film containing 55-85wt% of Ny6 and 15-45wt% of MXD6 (Ny6+MXD6=100wt%), which is biaxially drawn by a ratio not less than 2.8 in both machine direction and traverse direction.
(c) film is a biaxially drawing PET film.

The drawing direction of the resin film for split guide 13 and the splitting direction 16 of the splitting portion of the bag body 12 correspond with each other. The resin film for split guide 13 is band-shaped extending along the splitting portion of the bag body 12. Further, the splitting guide resin film 13 and the bag body 12 has a continuously formed notch for splitting 15 at a side thereof.

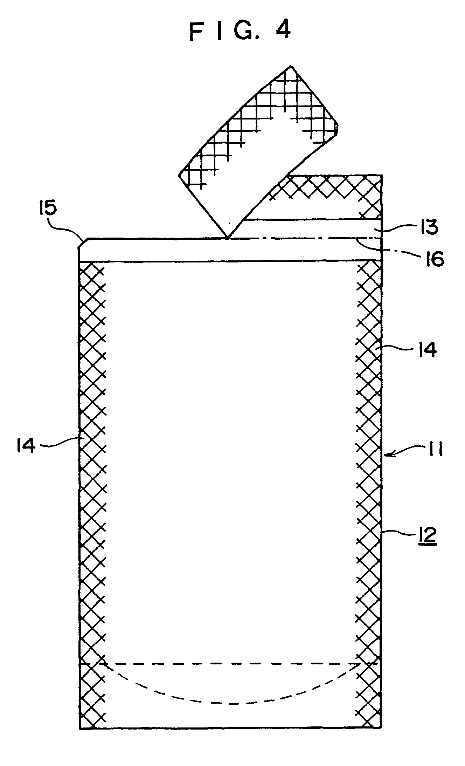

As shown in Fig. 4, when the easily openable self-standing bag 11 is opened by hand, the upper portion of the bag body 12 can be straightly cut off along the splitting direction 16 by tearing the bag body 12 together with the resin film for split guide 13 from the notch for splitting 15.

### [Second Embodiment]

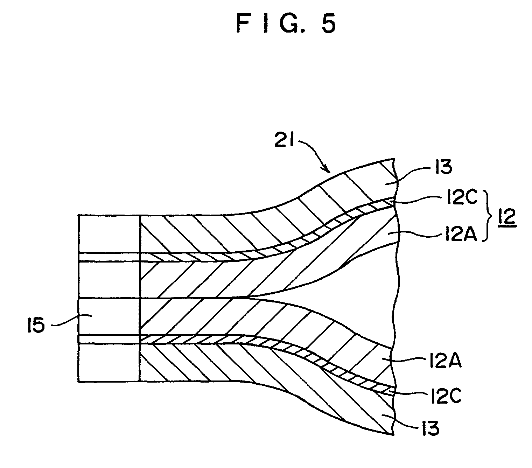

An easily openable self-standing bag 21 according to the second embodiment of the present invention will be described below with reference to Fig. 5.

The easily openable self-standing bag 21 has a bag body 12 made from lamination of below-described (a) film as a sealant layer 12A and (b) film as an outer layer 12C, and a resin film for split guide 13 adhered along a splitting portion of the bag body 12.

The (a) film and (b) film are the same as in the first embodiment.

### [Experiments 1 to 8]

In the aforesaid first embodiment, the sealant layer 12A, the intermediate layer 12B and the outermost layer 12C of the easily openable self-standing bag 11 were arranged as specifically defined in Tables 2 and 3. Here, presence of the split guide film 13 and a bonding strength of the split guide film 13 are simultaneously shown.

C4 type L-LDPE of (a) film - copolymer of ethylene and 1-butene. C8 type L-LDPE of (a) film - copolymer of ethylene and 1-octene. (b) film - drawing ratio (MD, TD): 3,0, thickness: 15µm.

Resin film for split guide - uniaxially drawing film of polyethylene, width: 5mm, notch for splitting - V-shaped notch.

Size of bag body - height: 250mm, width: 120mm, bottom-forming fold: 33mm.

Content in bag - liquid detergent of 500cc.

### [Experiments 9, 10]

In the aforesaid second embodiments, the sealant layer and the outermost layer of the easily openable self-standing bag 21 were arranged as specifically defined in Tables 2 and 3.

### [Comparisons 1 to 4]

The bags of respective comparisons were arranged as specifically defined in Tables 4 and 5.

### [Evaluation of Properties]

Easily-openability, self-standability and anti-environmental-stress crackability (ESC) was evaluated for the easily openable self-standing bag according to the aforesaid experiments and the comparisons. Additionally, general evaluation was made based on the evaluation results thereof. The results are shown in Tables 3 and 5.

The easily-openability was evaluated by splitting the splitting portion of the easily openable self-standing bag containing the contents by hand, which was evaluated based on split resistance, generation of split line shift and spilled number of the contents at the time. The evaluation result is shown in below Table 1.

**(Table 1)**

| Evaluation | Split resistance | Generation of split line shift (bag) | Spill of contents (bag) |
|---|---|---|---|
| ⓞ | Small | 0/10 | 0/10 |
| ○ | Medium | 3/10 | 0/10 |
| Δ | Large | 5/10 | 0/10 |
| × | Large | 8/10 | 3/10 |

The self-standability was evaluated by observing upper portion of the bag (standing pouch) filled with a liquid detergent when the bag was stood upright. The evaluation was as follows.

ⓞ indicates that the upper portion of the bag did not droop. ○ indicates that, though the upper portion of the bag slightly drooped, the droop did not impair appearance thereof. X indicates that appearance of the bag was greatly impaired on account of the droop of the upper portion of the bag.

The anti-environmental-stress-crackability was tested based on presence of crack after filling the liquid detergent into the bag and preserving the bag at 60°C for three days. The evaluation was as follows.

ⓞ indicates that the sealing portion scarcely retracted and the number of the bag broken when the bag was fallen off from the height of 1.5m was not more than two out of ten. ○ indicates that, though the sealing portion slightly retracted, the number of the bag broken when the bag was fallen off from the height of 1.5m was not more than four out of ten. X indicates that the sealing portion substantially retracted to deteriorate the strength as a pouch and the number of the bag broken by the falling-off test was not less than five out often.

General evaluation was marked ⓞ when all of the easily-openability, self-standability and ESC were ⓞ, marked ○ when all of the properties were not worse than Δ, and marked X when at least one of the properties were evaluated as ×.

**(Table 2)**

| | Outermost Layer | Intermediate Layer | Composition of OPA (%) | | Sealant Layer (%) |
|---|---|---|---|---|---|
| | | | Ny6 | MXD6 | (A) |
| Experiment1 | OPET(C) | OPA(B) | 70 | 30 | C4 type LL+LD(20)+EtBu1(10) |
| Experiment2 | OPET(C) | OPA(B) | 70 | 30 | C8 type LL+LD(20)+EtBu1(10) |
| Experiment3 | OPA(B) | OPET(C) | 70 | 30 | C4 type LL+LD(20)+EtBu1(10) |
| Experiment4 | OPET(C) | OPA(B) | 70 | 30 | C4 type LL |
| Experiment5 | OPET(C) | OPA(B) | 70 | 30 | C8 type LL |
| Experiment6 | OPA(B) | OPET(C) | 100 | 0 | C4 type LL+LD(20)+EtBu1(10) |
| Experiment7 | OPET(C) | OPA(B) | 70 | 30 | C4 type LL+LD(20)+EtBu1(10) |
| Experiment8 | OPET(C) | OPA(B) | 70 | 30 | C4 type LL+LD(20)+EtBu1(10) |
| Experiment9 | OPA(B) | --- | 70 | 30 | C4 type LL+LD(20)+EtBu1(10) |
| Experiment10 | OPA(B) | --- | 100 | 0 | C4 type LL + LD(20) + EtBu1(10) |
| LL=L-LDPE LD=LDPE EtBul=Et-Bul | | | | | |

**(Table 3)**

| | Thickness of Sealant Layer (*µ*m) | Guide Film | Bonding Strength (g/mm) | Easily-Openability | Self-Standability | ESC | General Evaluation |
|---|---|---|---|---|---|---|---|
| Experiment1 | 130 | Both Sides | 20 | ⓞ | ⓞ | ⓞ | ⓞ |
| Experiment2 | 130 | Both Sides | 20 | ○ | ⓞ | ⓞ | ○ |
| Experiment3 | 130 | Both Sides | 20 | ⓞ | ⓞ | ⓞ | ⓞ |
| Experiment4 | 130 | Both Sides | 20 | ○ | ⓞ | ○ | ○ |
| Experiment5 | 130 | Both Sides | 20 | Δ | ⓞ | ○ | ○ |
| Experiment6 | 130 | Both Sides | 20 | Δ | ⓞ | ⓞ | ⓞ |
| Experiment7 | 130 | Both Sides | 20 | ⓞ | ⓞ | ⓞ | ○ |
| Experiment8 | 130 | One Side | 20 | Δ | ⓞ | ○ | ○ |
| Experiment9 | 130 | Both Sides | 20 | ○ | ○ | ⓞ | ○ |
| Experiment10 | 130 | Both Sides | 20 | Δ | ○ | ⓞ | ○ |

**(Table 4)**

| | Outermost Layer | Intermediate Layer | Composition of OPA (%) | | Sealant Layer (%) |
|---|---|---|---|---|---|
| | | | Ny6 | MXD6 | (A) |
| Comparison1 | OPET(C) | OPA(B) | 70 | 30 | C4 type LL+LD(20)+EtBu1(10) |
| Comparison2 | OPET(C) | OPA(B) | 70 | 30 | C4 type LL+LD(20)+EtBu1(10) |
| Comparison3 | OPET(C) | OPA(B) | 70 | 30 | C4 type LL+LD(20)+EtBu1(10) |
| Comparison4 | OPET(C) | OPA(B) | 70 | 30 | C4 type LL+LD(20)+EtBu1(10) |

**(Table 5)**

| | Thickness of Sealant Layer (*µ*m) | Guide Film | Bonding Strength (g/mm) | Easily-Openability | Self-Standability | ESC | General Evaluation |
|---|---|---|---|---|---|---|---|
| Comparison1 | 130 | No | 20 | × | ⓞ | ⓞ | × |
| Comparison2 | 70 | Both Sides | 20 | ⓞ | × | ⓞ | × |
| Comparison3 | 160 | Both Sides | 20 | × | ⓞ | ⓞ | × |
| Comparison4 | 130 | Both Sides | 4 | × | ⓞ | ⓞ | × |

According to Table 3, the easily openable self-standing bags 11 and 21 according to Experiments were superior in easily-openability since the respective films of the sealant layer 12A, the intermediate layer 12B and the outermost layer 12C satisfied the specific condition of the present invention and the resin film for split guide 13 was formed.

Further, since the thickness of (a) film was within the range of the present invention, the bags were superior in self-standability.

Furthermore, it can be observed that both of easily-openability and self-standability were very excellent when the bag employed the film as the sealant layer 12A having C4 type L-LDPE as a main component and including LDPE and Et-Bul, the film containing OPET (oriented polyethylene terephthalate) or OPA (oriented polyamide) as the outer layer 12B and 12C, and the resin film for split guide 13 formed on both surfaces (Experiments 1, 3 etc.).

On the other hand, according to Table 5, though the bag according to comparison 1 had the same structure of the bag body, the bag had inferior easily-openability due to lack of the resin film for split guide.

Though the bag according to the comparison 2 had an arrangement similar to the bag body of the present invention, since the thickness of the (a) film of the sealant layer was too thin, sufficient self-standability could not be obtained.

Though the bag according to the comparison 3 had an arrangement similar to the bag body of the present invention, since the thickness of (a) film of the sealant layer was too thick, easily-openability was inferior.

Though the bag according to the comparison 4 was similar to the present invention, since the bonding strength of the resin film for split guide was weak, the resin film for split guide was peeled off when the splitting portion was torn off by hand, thus deteriorating easily-openability.

### Industrial Availability

The present invention can be suitably used for pouch containers for containing refill liquid such as detergent, cosmetic lotion and machine oil, and foods such as seasonings etc. in liquid phase and slurry phase.

## Claims

1. An easily openable self-standing bag, comprising:
(a) a film including linear low-density polyethylene (L-LDPE) as a main component;
(b) a film made from a raw film having nylon 6 (Ny6) as a main component biaxially drawn at a ratio not less than 2.8 in both MD direction and TD direction;
a bag body having a sealant layer of the (a) film of 80 to 150µm thick and an outer layer covering the sealant layer of the (b) film to be laminated thereon;
a resin film for split guide having directional array of a crystalline area laminated along a splitting portion of the bag body; and
a notch for splitting continuously extending from the resin film for split guide to the bag body.

2. The easily openable self-standing bag according to claim 1, comprising, in addition to the (a) film and the (b) film, (c) a biaxially drawing polyethylene terephthalate (PET) film, the (c) film being laminated as an outer layer of the sealant layer as well as the (b) film.

3. The easily openable self-standing bag according to claim 1 or 2, wherein a bonding strength of the resin film for split guide with the bag body is not less than 5g/mm.

4. The easily openable self-standing bag according to any one of claims 1 to 3, wherein the (b) film contains 55 to 85wt% of nylon 6 (Ny6) and 15 to 45wt% of metaxylylene adipamide (MXD6) (Ny6+MXD6=100wt%).

5. The easily openable self-standing bag according to any one of claims 1 to 4, wherein the L-LDPE of the (a) film is a copolymer of ethylene and 1-butene (C4 type L-LDPE).

6. The easily openable self-standing bag according to any one of claims 1 to 5, wherein a main component of the (a) film is L-LDPE, the film further containing low-density polyethylene (LDPE) and ethylene-butene-1 copolymer (Et-Bu1).

7. The easily openable self-standing bag according to any one of claims 1 to 5, wherein the resin film for split guide is provided on both surfaces of the bag body.
